# EUROPÄISCHE PATENTSCHRIFT

(11) **EP 1 749 497 B1**
(45) Veröffentlichungstag und Bekanntmachung des Hinweises auf die Patenterteilung: **17.10.2018**
(21) Anmeldenummer: 06400026.8
(22) Anmeldetag: 07.08.2006
(51) Int. Cl.: A61C 3/02

(54) **Dentales Präparationsinstrument**
Tooth Preparation Instrument
Instrument de préparation dentaire

(30) Priorität: 06.08.2005 DE 102005037130
(43) Veröffentlichungstag der Anmeldung: 07.02.2007
(73) Patentinhaber: Volle, Ralf, 75378 Bad Liebenzell (DE)
(72) Erfinder: Volle, Ralf, 75378 Bad Liebenzell (DE)
(74) Vertreter: Klocke, Peter

(56) Entgegenhaltungen:
- WO-A-01/03603
- DE-B- 1 294 592
- DE-C1- 19 718 938
- DE-U1- 20 211 248

## Beschreibung

Die Erfindung betrifft ein dentales Präparationsinstrument mit den im Oberbegriff des Patentanspruchs 1 angegebenen Merkmalen.

Solche Instrumente werden zum Beschleifen eines Zahnes benutzt, um ihn als Zahnstumpf für z. B. eine Überkronung zu präparieren. Dafür haben sie entsprechend kleine Abmessungen, z. B. einen Durchmesser im unteren einstelligen Millimeterbereich, und folglich ein fast nadelförmiges Aussehen. Bei diesen Präparationen wird als Übergang vom präparierten Zahnstumpf zum unpräparierten Zahnhals je nach Kronenart eine Hohlkehle oder eine L-förmige Stufe ausgebildet.

Zu diesem Zweck schließt sich an den zum Einspannen in einen Rotationsantrieb bestimmten Instrumentenschaft ein spanabhebend ausgebildeter, d. h. mit einem Schleifmittel oder auch mit Schneiden belegter so genannter Arbeitsteil in der Form eines Zylinders oder eines sich nach vorn verjüngenden Konus an. Das jeweils freie vordere Ende kann dabei z. B. rund, flach = eckig bzw. flach mit verrundeter Kante oder auch torpedoförmig ausgebildet sein. Im letzteren Fall hat es entweder, als so genannter klassischer Torpedo, eine schwach nach außen gewölbte, d. h. ballige, relativ flach auslaufende Spitze oder aber eine kegelig-spitz endende Spitze. Die klassische Torpedoform mit ihrer sanft gerundeten Kontur wird für die Ausbildung eines hohlkehlenförmigen, auf komplementäre Weise entsprechend sanft konturierten Übergangs bevorzugt.

Dabei ist eine solche ringsum am Zahnumfang auszubildende Hohlkehle nur sehr schwierig, d. h. nur mit viel Routine und Fingerspitzengefühl zu präparieren, da hierbei das zahnfleischgefährdend bis zur Spitze des Arbeitsteils spanabhebend ausgebildete Präparationsinstrument freihändig, also ohne Abstützmöglichkeit geführt werden muss. Folglich ist das Präparationsergebnis oft unbefriedigend, wobei Korrekturen nur durch weiteres, den meist konisch sich nach oben verjüngenden Zahnstumpf schwächendes Abschleifen von Zahnsubstanz möglich wären.

Auch kann sich durch ein ungewollt tieferes seitliches Eindringen des vollständig spanabhebend ausgebildeten Arbeitsteils in die Zahnflanke bis über die Instrumentenlängsachse hinaus eine Rinne am Auslauf der Hohlkehle ausbilden. Sie müsste durch Brechen mit einem zusätzlichen Werkzeug beseitigt werden, wodurch die präparierte Hohlkehle wieder beschädigt werden kann.

Ebenso ist die Hohlkehlenausbildung im Verlauf der ZahnstumpfPräparation durch das Präparationsinstrument selbst bedroht, da sie auch durch dessen Abrutschen oder zu tiefem nach unten Führen aufgrund seines spanabhebend ausgebildeten spitzen vorderen Endes wieder zerstört werden kann. Zudem besteht die große Gefahr von Verletzungen des Zahnfleischs, wenn es zu einer kaum vermeidbaren Berührung mit der spanabhebend ausgebildeten Torpedospitze kommt, die zu Blutungen während der Präparation führen können, die wiederum die Sicht behindern können.

Eine diesbezügliche Verbesserung soll z. B. ein das vordere Ende eines Instrumentenarbeitsteils axial verlängernder sehr dünner, z. B. aus der DE 299 02 114 U1 und DE 299 06 370 U1 bekannter Führungsstift bringen, der zumindest in seinem vorderen Endbereich nicht-spanabhebend ausgebildet ist. Das damit versehene Präparationsinstrument soll leichter gehandhabt werden können, indem dieser Stift beim Zahnstumpf-Präparieren unterhalb des Zahnfleischsaums am Zahnhals entlang geführt werden kann, um dadurch ein zu tiefes seitliches Eindringen des Instrumentenarbeitsteils in die Zahnflanke zu verhindern. Dies ist jedoch bei Patienten mit gesundem Zahnfleisch, d. h. ohne Zahnfleischtaschen, problematisch, da der Führungsstift zu schmerzhaften Ablösungen von Zahnfleisch vom Zahnhals führen kann.

Andererseits wird durch einen solchen Führungsstift die Abtragtiefe in seitlicher Richtung begrenzt, da sie durch ihn maximal nur noch der Differenz von Arbeitsteilradius und Führungsstiftradius entsprechen kann. Dadurch sind z. B. evtl. Formkorrekturen während der Zahnstumpfpräparation, auch z. B. im Sinne einer Egalisierung, nicht möglich.

Auch überträgt ein solcher am Zahnhals entlang zu führender Führungsstift dessen Unebenheiten auf die Kontur des zu präparierenden Zahnstumpfes.

Aus der DE 202 11 248 U1 ist wiederum ein Dentalinstrument bekannt, bei dem das gesamte vordere, leicht kegelförmig mit gerundeter Spitze auslaufende Ende des Arbeitsteils nicht-spanabhebend, also z. B. schleifmittelfrei, ausgebildet ist und erst der sich dahinter anschließende Arbeitsbereich eine spanabhebende Ausbildung, also z. B. einen Schleifmittelbelag aufweist, um auf diese Weise eine leichtere Führung des Instruments bei der Zahnpräparation zu ermöglichen. Wegen des nicht vorhandenen Schleifmittelbelags im Bereich des gerundet ausgebildeten vorderen Endes des Arbeitsteils dieses Instruments lässt sich mit ihm auch keine Übergangs-Hohlkehle ausbilden. Somit ist dieses Instrument nur für eine so genannte Tangentialpräparation geeignet.
Statt eine Hohlkehle mit einem dazu vorn torpedoförmig endenden Präparationsinstrument auszubilden, kann es für bestimmte Zahn-Überkronungen notwendig sein, eine L-förmige Stufenpräparation als Übergang vom präparierten Zahnstumpf zum unpräparierten Zahnhals auszubilden. Dafür werden die schon erwähnten, am vorderen Ende des Arbeitsteils rund ausgebildeten oder eine ebene Stirnfläche mit eckiger oder verrundeter Randkante aufweisenden Instrumente benutzt.
Sie können auch zur Präparation eines so genannten Kastens in einem Zahn für das Einsetzen eines Inlays benutzt werden. Für die Endbearbeitung der Kasten-Seitenwandungen kann die gesamte ebene Stirnfläche des z. B. zylindrischen Arbeitsteils des dafür benutzten Instruments nicht-spanabhebend ausgebildet sein, um so einen unerwünschten weiteren Zahnsubstanzabtrag auf der Kastensohle zu vermeiden. Ein derartig ausgebildetes Instrument kann auch bei einer Endbearbeitung einer L-förmigen Stufenpräparation eingesetzt werden.

WO 01/03603 A offenbart ein dentales Präparationsinstrument nach dem Oberbegriff von Anspruch 1. Aufgabe der vorliegenden Erfindung ist es, ein Präparationsinstrument der eingangs genannten Art derart weiterzubilden, dass insbesondere das Präparieren von Hohlkehlen und L-förmigen Stufen als Übergangsform vom präparierten Zahnstumpf zum unpräparierten Zahnhals, aber auch bei Inlay-Kastenpräparationen, vereinfacht und vervollkommnet wird.

Die Erfindung löst diese Aufgabe mit den im Patentanspruch 1 angegebenen Merkmalen. Vorteilhafte Weiterbildungen sind Gegenstand der Unteransprüche.

Die Erfindung basiert auf der Idee, die Handhabung von insbesondere für die erläuterten Übergangspräparationen eingesetzten Instrumenten dadurch zu erleichtern wie auch das Präparationsergebnis zu verbessern, dass sie mit - bei ihren sehr kleinen Abmessungen - gewissermaßen minimalisierten nicht-spanabhebend ausgebildeten Flächenbereichen versehen werden. Und zwar in Form einer - zumindest in der Draufsicht - zentrischen Kreisfläche vorn am freien vorderen Endbereich des Instrumenten-Arbeitsteils, wobei der Kreisflächen-Durchmesser einem Bruchteil des Durchmessers des Arbeitsteils an der Übergangsstelle zu seinem vorderen Endbereich entspricht. Diese Kreisfläche und der sich daran anschließende spanabhebend ausgebildete Flächenbereich gehen stufenlos ineinander über.

Durch diese erfindungsgemäße Aufteilung der Arbeitsfläche am freien vorderen Ende eines Präparationswerkzeugs in einen - mit bloßem Auge kaum erkennbaren - nicht-spanabhebend ausgebildeten kleinen und einen sich daran anschließenden, demgegenüber sehr viel "größeren" spanabhebend ausgebildeten Flächenbereich wird die Ausbildung einer Hohlkehle wie auch einer L-förmigen Stufe an einem zu präparierenden Zahn weder beeinträchtigt noch erschwert. Denn aufgrund des definierten Grö-βenverhältnisses von spanabhebend zu nicht-spanabhebend ausgebildetem Flächenteil dieser Arbeitsfläche kann mit letzterem z. B. im balligen Torpedospitzenbereich eines Hohlkehlen-Präparationsinstruments oder im eben verlaufenden Stirnflächen-Randbereich eines Stufen-Präparationsinstruments Zahnsubstanz solange abgetragen werden, bis der jeweils nicht-spanabhebende Flächenteil Kontakt mit einem sich bereits in einer zumindest beginnenden hohlkehlenförmigen oder L-stufenförmigen Konturierung befindenden Zahnbereich erhält. Erst durch diesen Kontakt wird bei unveränderter Haltestellung des Instruments ein weiterer Abtrag von Zahnsubstanz verhindert.

Dagegen kann z. B. mit dem spanabhebend ausgebildeten Flächenbereich des z. B. mit einer Torpedo-Spitze endend ausgebildeten Arbeitsteils nach einer vertikal nach oben gerichteten Bewegung mit dem Instrument erneut in radialer Richtung Zahnsubstanz abtragen werden. Denn durch diese Bewegung hat der zentrische nicht-spanabhebende Flächenbereich den Kontakt mit der schon zumindest anpräparierten Zahnflanke verloren und kann weiteren Zahnsubstanzabtrag nicht länger verhindern. Und zwar solange, bis er aufgrund weiteren Abtrags durch den abrasiven Flächenbereich der Torpedo-Spitze wieder Kontakt mit der Zahnflanke - in entsprechend höherer Stellung - bekommt.

Mit dieser Kombination von nicht-spanabhebenden zentrischen und stufenlos sich daran anschließenden spanabhebend ausgebildeten Flächenbereichen im vorderen Arbeitsteil-Endbereich wird ein sehr genaues Arbeiten beim Präparieren von Hohlkehlen- bzw. Stufen-Übergängen möglich. Insbesondere kann mit einer erfindungsgemäß ausgebildeten Torpedo-Spitze eines Arbeitsteils bei seinem Heranführen an die Zahnflanke für eine Hohlkehlenpräparation die Instrumentenmittelachse nicht mehr überschritten werden: Vorher stoppt der nicht-spanabhebend ausgebildete zentrische Spitzenbereich diese seitwärts gerichtete Bewegung, so dass kein weiterer Zahnsubstanzabtrag und somit kein weiteres Eindringen in die Zahnflanke möglich ist.

Ist erst einmal ein Zahn an seinem gesamten Umfang durch eine hin- und herpendelnde bzw. streichende Bewegung mit dem Präparationsinstrument zur Definition der Lage der Präparationsgrenze und damit gleichzeitig auch bereits leicht hohlkehlenförmig angeschliffen, dann erfährt das Präparationsinstrument in der so bereits entstandenen Hohlkehlen-"Rohkontur" eine Führung für weiteren Zahnsubstanzabtrag am gesamten Zahnumfang. Dabei ermöglicht der nicht-spanabhebende, also z. B. schleifmittelfreie, d. h. glatte, ggf. sogar auch polierte Bereich, z. B. einer Torpedo-Spitze, einerseits einen zahnfleischschonenden Zahnsubstanzabtrag entlang einer der die zuvor definierte Präparationsgrenze bildenden Art Höhenlinie nahe am Zahnfleischsaum. Dabei wird, wie schon erläutert, ein punktuell zu tiefes radiales Eindringen in die Zahnflankensubstanz wegen der eine solche Bewegung stoppenden Wirkung des am Auslauf der entstehenden Hohlkehle Kontakt mit dem Zahn bekommenden nicht-spanabhebenden zentrischen Flächenbereichs verhindert.

Ebenso wenig kann die schon ausgebildete Hohlkehlenkontur wieder zerstört werden, da die für ihre Ausbildung vorzugsweise benutzte Torpedo-Spitze erfindungsgemäß im Zentrum nicht-spanabhebend ausgebildet ist und so einen solchen Eingriff des übrigen spanabhebend ausgebildeten Spitzenflächenbereich in die Hohlkehlenkontur verhindern kann.

Somit bewirkt dieser zentrische nicht-spanabhebende Flächenbereich eine Führung des Präparationsinstruments bei den der Definition der Lage der Präparationsgrenze nachfolgenden Arbeitsgängen zur Fertigstellung der Hohlkehlenausgestaltung in der dabei nach und nach vollständig entstehenden Kontur. Diese ist dabei auch bei evtl. "Ausrutschern" mit dem Präparationsinstrument geschützt, da auch dann ein Kontakt mit dessen spanabhebend ausgebildeten Flächenbereich durch den diesem quasi "vorgelagerten", nicht-spanabhebend ausgebildeten zentrischen Flächenbereich des vorderen Arbeitsteilendes verhindert wird.

Bei dieser nicht-spanabhebenden zentrischen Fläche handelt es sich also um eine Führungsfläche, die hilft, das Präparationsinstrument am Zahn in der nach und nach vollständig am zu präparierenden Zahnstumpf entstehenden Hohlkehlen- oder auch Stufen-Kontur zu führen.

Gleichzeitig bewirkt diese Führung auch eine Entlastung für die das Präparationsinstrument führende Person. Zudem ermöglicht der nicht-spanabhebend ausgebildete Flächenbereich einer Torpedo-Spitze oder auch eines vorn gerundet ausgebildeten Stufen-Präparationsinstruments ein gewisses Gleiten des Instruments auf der Zahnsubstanz. Das wiederum lässt ein gelegentliches Abstützen mit dem Instrument während der Präparationsarbeit zu.

Trotz nicht-spanabhebenden Flächenbereichs ist eine etwaige Korrektur der Lage der Präparationsgrenze und damit auch z. B. der Hohlkehle jederzeit durch neuerliches tieferes Führen des Präparationsinstruments unterhalb des unteren Randes einer schon zum Teil ausgebildeten Hohlkehle möglich, da dann zunächst wieder der äußere spanabhebende Flächenbereich, z. B. der Torpedo-Spitze, Kontakt mit dem Zahn hat, während der nicht-spanabhebende zentrische, d. h. innere Flächenbereich sich in einer zunächst keinen Kontakt mit dem Zahn ermöglichenden Position vor der Zahnflanke befindet.

Weiter ist es - anders als z. B. mit dem bekannten, eingangs schon erwähnten Führungsstift - bei der Präparation einer Hohlkehle möglich, in radialer Richtung gesehen, verschiedene Abtragstiefen mit nur einem Arbeitsteil-Durchmesser zu erreichen. Aber auch nach ihrer Fertigstellung ist, wie schon zuvor erläutert, noch eine weitere Reduktion von Zahnsubstanz, beginnend in ihrem oberen Teil, möglich. Z. B. durch ein entsprechendes Höherziehen des erfindungsgemäßen Präparationsinstruments. Sie wird auf diese Weise tiefer in den Zahnstumpf ausgebildet. Dadurch kann ein sonst notwendiger Wechsel auf ein Präparationsinstrument mit größerem Durchmesser für einen weiteren Abtrag von Zahnsubstanz überflüssig und somit Präparationszeit gespart werden.

Durch diesen zentrischen nicht-spanabhebend ausgebildeten Flächenbereich kann das Präparationsinstrument auch zahnfleischschonender in beliebiger "Höhe" am Zahn entlang geführt werden - im Gegensatz etwa zu dem eingangs aus dem Stand der Technik zitierten Führungsstift, dessen "Tiefgang" durch die Tiefe vorhandener Zahnfleischtaschen begrenzt ist.

Ein erfindungsgemäß ausgebildetes Präparationswerkzeug kann mit Vorteil insbesondere auch an schwer einsehbaren Stellen eingesetzt werden, da sich eine sehr gleichmäßige Ausformung der umlaufend auszubildenden Hohlkehle dank der ein stetiges Arbeiten ermöglichenden Führungseigenschaft des zentrischen nicht-spanabhebend ausgebildeten Flächenbereichs am vorderen Arbeitsteil-Ende quasi zwangsläufig ergibt und nur noch darauf zu achten ist, dass der vorgesehene Verlauf der Präparationsgrenze längs einer Art äquidistant am Zahnhals umlaufenden Höhenlinie eingehalten wird.

Diese erfindungsgemäße nicht-spanabhebend ausgebildete "Führungsfläche" ist nicht nur bei Präparationsinstrumenten mit zylindrischem Arbeitsteil sämtlicher Durchmesser und klassisch-balliger oder kegelförmiger Torpedoform ausbildbar, sondern auch an konischen Arbeitsteilen mit ebenfalls torpedoförmig ausgebildeten freien vorderen Enden wie auch an den vorderen Stirnflächen zylindrischer Arbeitsteilen sämtlicher Durchmesser und Spitzenvarianten.
Dabei ist es unerheblich, ob die zentrischen nicht-spanabhebend ausgebildeten Flächenbereiche in den Instrumentenrohling integriert, aufgeschweißt, aufgeklebt oder anders angebracht sind, bzw. aus welchem Material sie bestehen.
Das zuvor für Präparationsinstrumente mit zur Hohlkehlenpräparation vorzugsweise torpedoförmig ausgebildetem vorderen Arbeitsteil-Ende Gesagte gilt entsprechend auch für die Präparationsinstrumente, die für die Ausbildung einer L-förmigen Stufe als Übergang von präpariertem Zahnstumpf zum unpräparierten Zahnhals vorgesehenen sind. Sie haben dafür z. B. eine ebene Stirnfläche am vorderen Arbeitsteil-Ende, in deren Zentrum eine nicht-spanabhebend ausgeführte Kreisfläche ausgebildet ist, die stufenlos in den angrenzenden kreisringförmigen, spanabhebend ausgebildeten Stirnflächenbereich übergeht.

Ein Stufen-Präparationsinstrument, das nicht Teil der Erfindung ist, kann aber auch ein Arbeitsteil in der Form "Zylinder rund" haben. D. h., dessen freies vorderes Ende endet nicht mit einer ebenen Stirnfläche, sondern es ist aufgrund einer entsprechend gerundeten Stirnflächen-Randkante mehr weniger stark gerundet bzw. verrundet. Ggf. kann das vordere Ende sogar die Form einer Halbkugel aufweisen.

Im Zentrum dieses gerundeten freien vorderen Arbeitsteil-Endes ist wieder ein Flächenbereich in der Form einer - zumindest in der Draufsicht - Kreisfläche nicht-spanabhebend ausgebildet.

Mit derartig ausgebildeten Stufen-Präparationsinstrumenten können auf ebenfalls gut kontrollierbare Weise stufenförmige Übergänge ausgebildet werden, indem der nicht-spanabhebend ausgebildete zentrische Stirnflächenbereich einen ungleichmäßig tiefen Zahnsubstanzabtrag auf dem kurzen Schenkel des L-förmigen Übergangs entlang des Zahnumfangs verhindert: Wenn dieser Bereich Kontakt mit einem bereits ausgebildeten Schenkelabschnitt bekommt, verhindert er nur bei exakt vertikal ausgerichtetem Instrument einen weiteren Abtrag in vertikaler Richtung. Wird es dagegen in eine Schrägstellung gebracht, dann kommt sofort ein spanabhebend ausgebildeter Randbereich der Stirnfläche in Kontakt mit einem Schenkelbereich und führt unmittelbar zu einem Zahnsubstanzabtrag. Diese ständige Gefahr bedeutet, dass diese ebenfalls freihändig zu führenden Stufen-Präparationsinstrumente eine größere Konzentration bei ihrer Benutzung erfordern als die zur Hohlkehlenpräparation benutzten Instrumente mit den torpedoförmigen Arbeitsteil-Enden.

Derartige Stufen-Präparationsinstrumente können auch bei der Präparation eines Inlay-Kastens genutzt werden. Hier verhindert der zentrische nicht-spanabhebend ausgebildete Stirnflächenbereich ein ggf. unterschiedlich tiefes Eindringen der Stirnfläche in die Kastensohle bzw. hilft er bei deren gleichmäßig ebener Ausbildung durch ein Abtragen von Sohlenunebenheiten auf ein einheitliches Sohlenniveau.

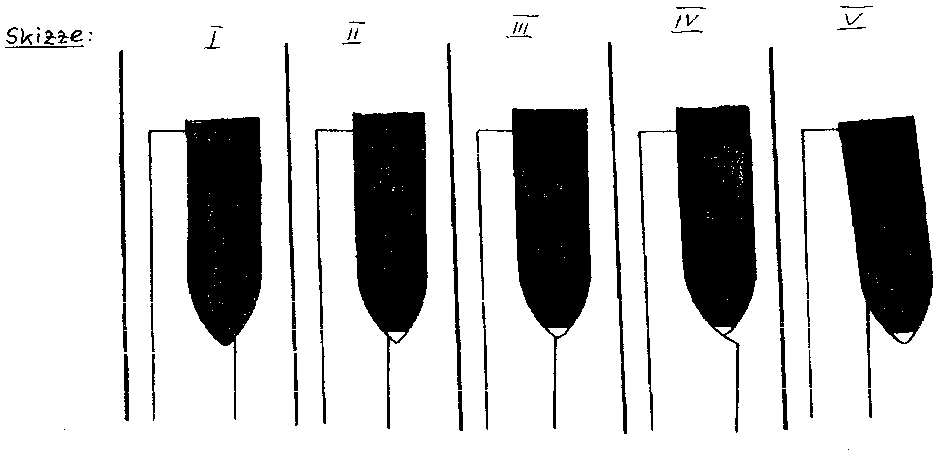

Anhand von schematischen Zeichnungen werden nachfolgend drei Beispiele beschrieben, wovon das erste und das dritte Beispiel für erfindungsgemäß ausgebildete dentale Präparationsinstrumente näher beschrieben.
Es zeigen in einer ca. 20-fachen Vergrößerung:
- Fig. 1: die Seitenansicht eines Hohlkehlen-Präparationsinstruments in der Ausführung "Torpedo klassisch",
- Fig. 2: die Draufsicht auf das vordere Ende des Instruments nach Fig. 1;
- Fig. 3: die Seitenansicht eines Stufen-Präparationsinstruments in der Ausführung "Zylinder rund", die nicht Teil der Erfindung ist,
- Fig. 4: die Draufsicht auf das vordere Ende des Instruments nach Fig. 3;
- Fig. 5: die Seitenansicht eines weiteren Stufen-Präparationsinstruments in der Ausführung "Zylinder flach, Kante gerundet" und
- Fig. 6: die Draufsicht auf das Instrument nach Fig. 5.
Die in den Fig. 1, 3 und 5 gezeigten, insbesondere für Hohlkehlen- bzw. Stufen- und ggf. auch Inlaykasten-Präparationen bestimmten dentalen Präparationsinstrument, haben jeweils einen zylindrischen Einspannschaft 1 und einen sich daran anschließenden, mit einem Schleifmittel 2 aus, in den Figuren durch Schwarzfärbung angedeutet, z. B. Diamantsplittern oder Hartmetallsplittern belegten, ebenfalls zylindrischen so genannten Arbeitsteil 3. Dessen freies vorderes Ende 4 ist je nach Bestimmungszweck des jeweiligen Instruments unterschiedlich ausgebildet.

Es hat in der in Fig. 1 gezeigten so genannten "Torpedo"-Ausführung die Form einer außen gewölbten, d. h. balligen, relativ flach auslaufenden Spitze, im Gegensatz zu der auch bekannten Ausführung mit einer kegelig-spitzen Spitze. Bei dem in Fig. 3 gezeigten Instrument ist das Ende rund und in Fig. 5 hat es die Form einer ebenen Stirnfläche mit gerundeter bzw. verrundeter (Stirn-)Kante; entsprechend dieser Ausgestaltung werden diese beiden Instrumente auch benannt.

Am vorderen Ende bzw. Endbereich 4 des Arbeitsteils 3 der gezeigten drei Instrumente befindet sich im jeweiligen Zentrum ein in der Draufsicht, wie in Fig. 2, 4 und 6 gezeigt, als Kreisfläche erscheinender nicht spanabhebend, d. h. hier schleifmittelfrei ausgebildeter Flächenbereich 5. Beim gezeigten "Torpedo" (Fig. 1) bzw. "Zylinder rund" (Fig. 3) hat er in Wirklichkeit zumindest annähernd die Form einer Art Kugelhaube. Dagegen hat seine Oberfläche beim "Zylinder flach, Kante gerundet" (Fig. 5) tatsächlich die in Fig. 6 gezeigte Form einer Kreisfläche. Sie ist jedoch wegen der zylindrischen Form seines Arbeitsteils 3 und der hier bündigen Einbettung in die schleifmittelbelegte Stirnfläche des zylindrischen Arbeitsteils (3), d. h. auf dem Niveau des Schleifmittelbelags 2, in der Seitenansicht nach Fig. 5 nicht zu sehen.

Zur Ausbildung dieser schleifmittelfreien Bereiche 5 kann beim Torpedo (Fig. 1) z. B. der Umfang des Arbeitsteils nach einem entsprechenden, die Begrenzung des nicht-spanabhebend auszubildenden Flächenbereichs 5 definierenden Einstichs geringfügig auf der ganzen restlichen Länge des Arbeitsteils 3 für die Aufbringung des Schleifmittelbelags 2 abgetragen. Dieser schließt bündig an die Einstichstelle am sich auf gleichem Niveau befindenden Flächenbereich 5 an, so dass sie stufenlos ineinander übergehen und das Instrument behinderungsfrei benutzt werden kann.

Auf ähnliche Weise erfolgt die Ausbildung des nicht-spanabhebenden Flächenbereichs 5 am vorderen Ende 4 des Arbeitsteils 3 beim in Fig. gezeigten "Zylinder rund". Wegen dessen geringeren Rundung als beim "Torpedo" ist von diesem Flächenbereich 5 in Fig. 3 trotz ca. 20-facher Vergrößerung fast nichts zu sehen.

Beim "Zylinder flach" (Fig. 5) wird zur Ausbildung des zentrischen nicht-spanabhebenden Flächenbereichs 5 die Stirnfläche um einen der Höhe des Schleifmittelbelags 2 entsprechendes Maß bis auf z. B. eine Art Nocken im Stirnflächenzentrum, an den hier der Schleifmittelbelag 2 bündig angrenzend ausgebildet wird. So wird auch hier eine Stufenbildung zwischen diesem Belag 2 und dem schleifmittelfreien Flächenbereich 5 verhindert.

Dieser Flächenbereich 5 bildet eine Führungsfläche für das Führen dieses Präparationsinstruments. Und zwar zunächst entlang der provisorisch durch Anschleifen des als Zahnstumpf für z. B. eine Überkronung zu präparierenden Zahns längs seines Umfangs ausgebildeten Präparationsgrenze und danach entlang der immer vollständiger am Zahnumfang ausgebildeten Hohlkehle beim Torpedo bzw. der Stufe bei den beiden Stufen-Präparationsinstrumenten nach Fig. 3 und 5.

Der Durchmesser der in der Draufsicht zentrischen schleifmittelfreien Kreisfläche 5 beträgt einen Bruchteil des Durchmessers des Arbeitsteils 3 an dessen Übergangsstelle zu diesem vorderen Endbereich 4, hier in einer Größenordnung von z. B. zwei Fünftel bis ein Drittel des besagten Arbeitsteil-Durchmessers.
Der nicht-spanabhebend ausgebildete zentrische Flächenbereich 5 kann aus dem gleichen Material wie das Arbeitsteil 3 des jeweiligen Präparationsinstruments sein. Es ist aber auch denkbar, im nach vorn weisenden Zentrum des freien vorderen Arbeitsteil-Endes 4 eine Ausnehmung auszubilden, um darin ein anderes Material einzusetzen, wie z. B. für die Torpedospitze.

## Patentansprüche

1. Dentales Präparationsinstrument mit einem Schaftteil (1) und einem sich daran anschließenden Arbeitsteil (3) mit einer für eine Zahnpräparation bestimmten und angepassten Ausgestaltung in einer spanabhebenden Ausbildung, wobei der Arbeitsteil (3) die Form eines Zylinders oder Konus mit einem freien vorderen Endbereich (4) aufweist, an dem vorne ein nicht-spanabhebend ausgebildeter Flächenbereich (5) vorgesehen ist, an dem ein sich bis zum Schaftteil (1) erstreckender spanabhebend ausgebildeter Flächenbereich des Arbeitsteil (3) anschließt, wobei der nicht-spanabhebend ausgebildete Flächenbereich (5) zumindest in der Draufsicht die Form einer zentrischen Kreisfläche aufweist, deren Durchmesser einem Bruchteil des Durchmessers des Arbeitsteils (3) an dessen Übergangsstelle zu dem vorderen Endbereich (4) entspricht, und wobei der nicht-spanabhebende Flächenbereich (5) und der spanabhebende Flächenbereich stufenlos ineinander übergehen, **dadurch gekennzeichnet,**
**dass** der freie vordere Endbereich (4) des Arbeitsteils (3) als ballig-gerundete Spitze in der so genannten "klassischen Torpedo"-Form ausgebildet ist und der nicht-spanabhebend ausgebildete zentrische Flächenbereich (5) eine kugelhaubenartige Form aufweist,
oder,
**dass** der freie vordere Endbereich (4) des Arbeitsteils (3) als ebene Stirnfläche mit gerundeter Randkante ausgebildet ist und der nicht spanabhebend ausgebildete zentrische Flächenbereich (5) eine kreisflächenartige Form aufweist.

2. Präparationsinstrument nach Anspruch 1, **dadurch gekennzeichnet, dass** der nicht-spanabhebende Flächenbereich (5) ein anderes Material aufweist, als das aus dem der Arbeitsteil (3) mit dem spanabhebenden Flächenbereich besteht.

## Claims

1. Dental preparation instrument comprising a shaft part (1) and a working part (3) connected thereto having a cutting structure that is designed and adapted for the preparation of a tooth, the working part (3) having the shape of a cylinder or cone comprising a free front end region (4) on the front of which a non-cutting surface region (5) is provided, to which a cutting surface region of the working part (3) that extends up to the shaft part (1) is connected, the non-cutting surface region (5) having, at least in plan view, the shape of a centric circular surface, the diameter of which corresponds to a fraction of the diameter of the working part (3) at the transition point thereof into the front end region (4), and the non-cutting surface region (5) and the cutting surface region steplessly transitioning into one another, **characterised in that** the free front end region (4) of the working part (3) is a spherically rounded tip in the shape of what is referred to as a "classical torpedo" and the non-cutting centric surface region (5) has a spherical cap-like shape,
or **in that** the free front end region (4) of the working part (3) is a planar end surface having a rounded outer edge and the non-cutting centric surface region (5) has a circular surface-like shape.

2. Dental preparation instrument according to claim 1, **characterised in that** the non-cutting surface region (5) comprises a different material to that of which the working part (3) having the cutting surface region consists.

## Revendications

1. Instrument de préparation dentaire, comprenant une partie (1) formant fût et une partie opérante (3) qui s'y rattache et offre une configuration destinée et adaptée à une préparation dentaire, en une réalisation à enlèvement de copeaux, ladite partie opérante (3) revêtant la forme d'un cylindre ou d'un cône muni d'une région extrême antérieure libre (4) à l'avant de laquelle est prévue une zone de surface (5) réalisée pour être sans enlèvement de copeaux, à laquelle se rattache une zone de surface de la partie opérante (3), réalisée avec enlèvement de copeaux et s'étendant jusqu'à la partie (1) formant fût, sachant que ladite zone de surface (5) réalisée sans enlèvement de copeaux revêt, au moins observée en plan, la forme d'une surface circulaire centrée dont le diamètre correspond à une fraction du diamètre de ladite partie opérante (3) dans la zone de transition de cette dernière avec la région extrême antérieure (4), et sachant que ladite zone de surface (5) exempte d'enlèvement de copeaux, et la zone de surface à enlèvement de copeaux, fusionnent l'une dans l'autre en continu, **caractérisé par le fait que** la région extrême antérieure libre (4) de la partie opérante (3) est réalisée en tant que pointe à arrondi de configuration bombée, sous la forme désignée par « en torpille classique », et la zone de surface centrée (5), réalisée sans enlèvement de copeaux, revêt une forme de type coiffe sphérique,
ou
que ladite région extrême antérieure libre (4) de ladite partie opérante (3) est réalisée en tant que surface frontale plane à arête marginale arrondie, et ladite zone de surface centrée (5), réalisée sans enlèvement de copeaux, revêt une forme de type surface circulaire.

2. Instrument de préparation selon la revendication 1, **caractérisé par le fait que** la zone de surface (5), exempte d'enlèvement de copeaux, présente un matériau autre que celui dont est constituée la partie opérante (3) dotée de la zone de surface à enlèvement de copeaux.
